# EUROPEAN PATENT APPLICATION

(11) **EP 4 553 968 A1**
(43) Date of publication of application: **14.05.2025**
(21) Application number: 24201459.5
(22) Date of filing: 19.09.2024
(51) Int. Cl.: H01M 50/143, H01M 50/152, H01M 50/183, H01M 50/342

(54) **CAP ASSEMBLY, BATTERY AND BATTERY PACK**

(30) Priority: 10.11.2023 CN 202323055307 U; 10.11.2023 CN 202311504253; 05.02.2024 WO PCT/CN2024/076075
(71) Applicant: Eve Energy Co., Ltd., Huizhou, Guangdong 516006 (CN)
(72) Inventor: LI, Jidong, Huizhou, Guangdong, 516006 (CN); FU, Zhibo, Huizhou, Guangdong, 516006 (CN); WANG, Xingjian, Huizhou, Guangdong, 516006 (CN); SONG, Pengyuan, Huizhou, Guangdong, 516006 (CN)
(74) Representative: Murgitroyd & Company

(57) **Abstract**

The present disclosure provides a cap assembly (100), a battery (1000), and a battery pack. The cap assembly (100) includes an explosion-proof sheet (30) including a main body (32) and a protrusion (33) provided on a first surface (301) of the main body (32); an orifice plate (40) including a first portion (42) and a second portion (43) that are connected, at least one first pressure relief hole (41) being disposed between the first portion (42) and the second portion (43), the first portion (42) being disposed closer to a center of the orifice plate (40) relative to the second portion (43); an insulating gasket (50) disposed between the explosion-proof sheet (30) and the orifice plate (40), where the insulating gasket (50) being configured to cover at least a portion of the first portion (42).

## Description

### TECHNICAL FIELD

The present disclosure relates to the field of batteries, and more particularly, to a cap assembly, a battery, and a battery pack.

### BACKGROUND

A cap assembly of a cylindrical lithium ion secondary battery generally includes a top cover, an explosion-proof sheet, an orifice plate, and an insulating gasket disposed between the explosion-proof sheet and the orifice plate. The orifice plate is also provided with a first pressure relief hole for pressure relief purposes.

In the related art, the insulating gasket generally covers an outer side face of the orifice plate, and an outer surface of a portion of the orifice plate which is located on an outer side of the first pressure relief hole of the orifice plate. The area covered by the insulating gasket is too small to cause the battery and its battery module to form a short circuit connection between the orifice plate and the explosion-proof sheet during short circuit and crush tests, thereby affecting the performance of the battery.

### SUMMARY

The present invention is defined by the independent claims as appended. Developments are set forth in the dependent claims.

Embodiments of the present disclosure provide a cap assembly, a battery, and a battery pack, which may alleviate the technical problem of forming a short circuit connection between an orifice plate and an explosion-proof sheet in a battery.

In a first aspect, an embodiment of the present disclosure provides a cap assembly for a battery, the cap assembly including:
an explosion-proof sheet including a main body and a protrusion provided on a first surface of the main body;
an orifice plate including a first portion and a second portion that are connected, at least one first pressure relief hole being disposed between the first portion and the second portion, the first portion being disposed closer to a center of the orifice plate relative to the second portion;
an insulating gasket disposed between the explosion-proof sheet and the orifice plate, where the insulating gasket being configured to cover at least a portion of the first portion.

In a possible implementation, the insulating gasket includes at least one second pressure relief hole disposed coaxially with the first pressure relief hole, the second pressure relief hole having an inner diameter that is not less than an inner diameter of the first pressure relief hole.

In a possible implementation, the second pressure relief hole includes a waist-shaped hole.

In a possible implementation, the second pressure relief hole is disposed in an annular area with a radius of 4mm~6mm from a center of the insulating gasket.

In a possible implementation, the insulating gasket further includes a through-hole in a central area of the insulating gasket for passage of the protrusion.

In a possible implementation, an inner diameter of the through-hole is 2.6mm∼3.3mm, or an outer diameter of the protrusion is 1.9mm∼2.5mm.

In a possible implementation, an inner diameter of the through-hole is 3.5mm~4.0mm, or an outer diameter of the protrusion is 2.9mm~3.4mm.

In a possible implementation, the insulating gasket includes a third portion on which the second pressure relief hole is provided, and a fourth portion provided to protrude with respect to the third portion.

In a possible implementation, a portion of the main body of the explosion-proof sheet is received inside the third portion.

In a possible implementation, a thickness of the third portion is greater than 0.2mm, or a thickness of the fourth portion is greater than 0.25mm.

In a possible implementation, the insulating gasket further includes a fifth portion bent and attached to the fourth portion, the fifth portion being wrapped around an outer side wall of a portion of the orifice plate.

In a possible implementation, the insulating gasket includes a PFA material.

In a possible implementation, the main body is further provided with one or more first score lines, the explosion-proof sheet further including a second surface disposed opposite the first surface, the first score lines being recessed inwardly from the second surface, a projection of the second pressure relief hole on the first surface being configured to cover a portion of a projection of the first score lines on the first surface.

In a possible implementation, the orifice plate further includes a third surface and a fourth surface that are oppositely disposed, the orifice plate further including a blind hole being formed by recessing inwardly from the fourth surface, the first surface and the third surface being welded to form a welding area on the third surface, a projection of the welding area on the fourth surface being located within the blind hole.

In a possible implementation, the orifice plate further includes one or more second score lines disposed on the third surface, the second score lines being configured as an annular groove, a projection of the annular groove on the fourth surface being located at an outer periphery of the welding area.

In a possible implementation, the projection of the annular groove on the fourth surface is located within the blind hole.

In a second aspect, an embodiment of the present disclosure provides a battery including the cap assembly as described above, the battery including a cylindrical lithium ion battery.

In a third aspect, an embodiment of the present disclosure provides a battery pack including a plurality of batteries, each of the plurality of batteries including the cap assembly as described above.

### BRIEF DESCRIPTION OF THE DRAWINGS

In order that the technical solutions in the embodiments of the present disclosure may be more clearly described, reference will now be made briefly to the accompanying drawings required for the description of the embodiments. It will be apparent that the accompanying drawings in the description below are merely some of the embodiments of the present disclosure, and other drawings may be made to the skilled person in the art without involving any inventive effort.
FIG. 1 is a perspective view of a battery according to an embodiment of the present disclosure;
FIG. 2 is a perspective view of a cap assembly according to an embodiment of the present disclosure;
FIG. 3 is an exploded view of a cap assembly according to an embodiment of the present disclosure;
FIG. 4 is a cross-sectional view of a cap assembly according to an embodiment of the present disclosure;
FIG. 5 is a partially enlarged view of FIG. 4;
FIG. 6 is a perspective view of an insulating gasket according to an embodiment of the present disclosure;
FIG. 7 is a cross-sectional view of an insulating gasket according to an embodiment of the present disclosure;
FIG. 8 is a partially enlarged view of FIG. 7;
FIG. 9 is a perspective view of an orifice plate according to an embodiment of the present disclosure;
FIG. 10 is a cross-sectional view of a short circuit test sample of a battery according to an embodiment of the present disclosure;
FIG. 11 is a cross-sectional view of a cap assembly in the related art;
FIG. 12 is a cross-sectional view of a crush test sample of a battery in the related art;
FIG. 13 is a cross-sectional view of a short circuit test sample of a battery in the related art;

### Reference numeral:

1000. battery; 110. housing;
100. cap assembly; 10. top cover; 11. first hole; 12. base portion; 13. extension portion; 131, side face; 132, top end face;
20. sealing sleeve;
30. explosion-proof sheet; 301. first surface; 302. second surface; 31. first score lines; 32. main body; 321. first platform; 322. second platform; 33. protrusion; 34. first sidewall;
40. orifice plate; 401. third surface; 402, fourth surface; 41. first pressure relief hole; 42. first portion; 43. second portion; 44. blind hole; 45. welding line; 46. second score lines;
50. insulating gasket; 51. second pressure relief hole; 511. first side edge; 512, second side edge; 52. through-hole; 53. third portion; 54. fourth portion; 55, fifth portion.

### DETAILED DESCRIPTION

In the following, the technical solutions in the embodiments of the present disclosure will be clearly and completely described in connection with the accompanying drawings in the embodiments of the present disclosure. It will be apparent that the described embodiments are merely a portion of the embodiments of the present disclosure, rather than all the embodiments. Based on the embodiments in the present disclosure, all other embodiments obtained by the skilled person in the art without involving any inventive effort are within the scope of the present disclosure. Furthermore, it is to be understood that the specific embodiments described herein are for purposes of illustration and explanation only and are not intended to limit the present disclosure. In the present disclosure, unless otherwise specified, directional words used herein such as "up" and "down" usually refer to up and down directions of a device in actual use or in an operational state, and in particular, to directions as shown in the drawings. References of "inside" and "outside" are made with respect to an outline of the device.

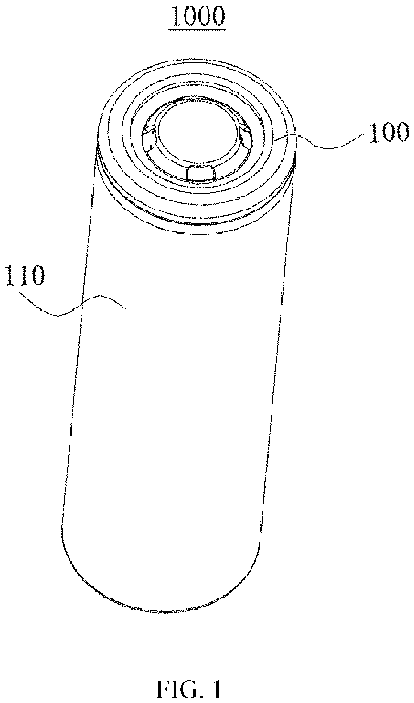

Embodiments of the present disclosure provide a battery 1000. As shown in FIG. 1, taking a cylindrical lithium ion secondary battery as an example, the battery 1000 includes a housing 110, a cap assembly 100, a positive electrode, a negative electrode, a diaphragm and an electrolyte, where the housing 110 is preferably made of a nickel-plated steel sheet material to form a hollow cylindrical structure provided with an open top end, the cap assembly 100 is connected to the open top end of the housing 110 and seals the open top end of the housing 110, the housing 110 and the cap assembly 100 are enclosed to form an internal cavity of the battery 1000, the diaphragm is preferably made of a polyethylene film material, the diaphragm is configured to separate a material of the positive electrode and a material of the negative electrode, and the positive electrode material, the negative electrode material, and the diaphragm are spirally wound within the internal cavity of the battery 1000.

The positive electrode is further electrically connected to the cap assembly 100 through a positive electrode bus plate, the negative electrode is further electrically connected to the housing 110 through a negative electrode bus plate; or the positive electrode is further electrically connected to the housing 110 through the positive electrode bus plate, and the negative electrode is further electrically connected to the cap assembly 100 through the negative electrode bus plate.

The battery 1000 may be used in a portable electronic device by way of combination, where a battery cavity is provided inside the portable electronic device, and an interior of the battery cavity may receive one or more batteries that are matched according to an electric capacity required by the electronic device. The electronic device may be any device in the related art in which a lithium ion battery is required to supply power.

Embodiments of the present disclosure also provide a battery pack in which a plurality of unit cells inside the battery pack may be arranged in series connection with each other, or the plurality of unit cells may be arranged in parallel connection with each other, or the plurality of unit cells may be arranged in a mixture of series and parallel connections with each other, so that the battery pack has a capacity and power suitable for use by a powered device.

The battery pack further includes a connecting piece for connecting the plurality of unit cells such that there are stable series and/or parallel connection structures between positive and negative electrodes of the plurality of unit cells. A material suitable for preparing the connecting piece includes copper foil.

The battery pack further includes a case for securing and protecting a plurality of unit cells and other parts. The case may be assembled from a plurality of sub-cases. A material suitable for preparing the case has good shock resistance, water resistance, and insulation properties. A suitable material includes metal or plastic materials.

The above-described battery packs are applicable to powered devices including mobile phones, portable devices, laptops, electric bicycles, electric vehicles, electric boats, electric toys, electric tools, and the like.

Advantageous effects of embodiments of the invention are as follows.

According to the cap assembly provided by the present disclosure, by extending at least a portion of the insulating gasket onto a first portion covering the orifice plate, the first portion being closer to the center of the orifice plate relative to the first pressure relief hole of the orifice plate, the coverage area of the insulating gasket on the orifice plate is in turn increased. Thus, the increased coverage area of the insulating gasket may effectively prevent a short circuit connection being formed between the orifice plate and the explosion-proof sheet when the battery is subjected to short circuit and crush tests.

According to the battery provided by the present disclosure which includes the cap assembly described above, by extending at least a portion of the insulating gasket onto a first portion covering the orifice plate, the first portion being closer to the center of the orifice plate relative to the first pressure relief hole of the orifice plate, the coverage area of the insulating gasket on the orifice plate is in turn increased. Thus, the increased coverage area of the insulating gasket may effectively prevent a short circuit connection being formed between the orifice plate and the explosion-proof sheet when the battery is subjected to short circuit and crush tests.

According to the battery pack provided by the present disclosure which includes more than one battery described above, each battery including the cap assembly described above, by extending at least a portion of the insulating gasket onto a first portion covering the orifice plate, the first portion being closer to the center of the orifice plate relative to the first pressure relief hole of the orifice plate, the coverage area of the insulating gasket on the orifice plate is in turn increased. Thus, the increased coverage area of the insulating gasket may effectively prevent a short circuit connection being formed between the orifice plate and the explosion-proof sheet when the battery is subjected to short circuit and crush tests.

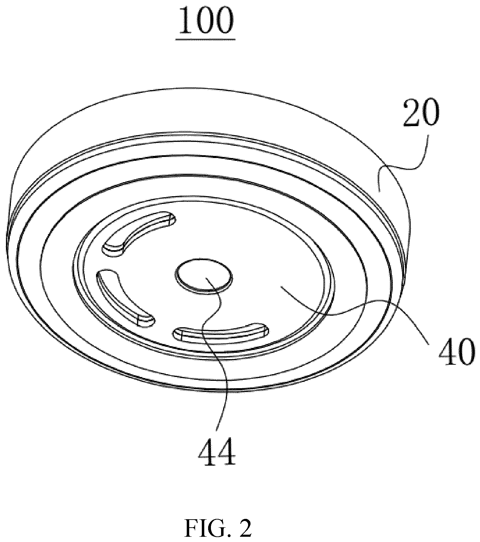

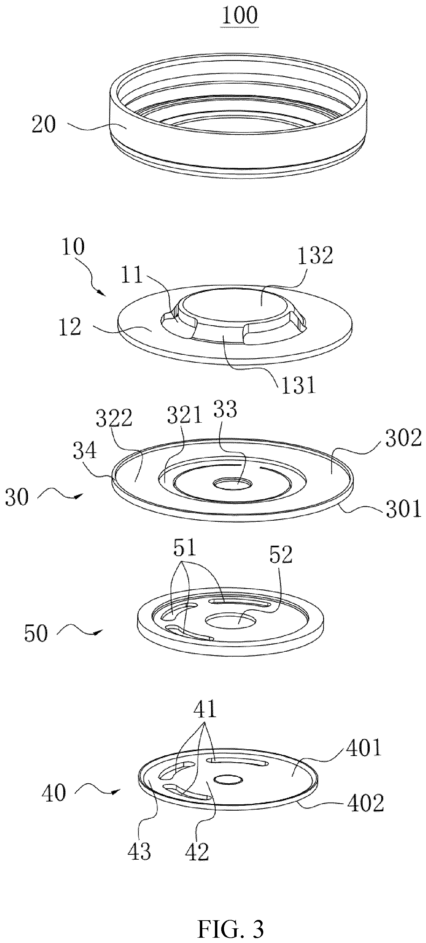

As shown in FIGS. 2-3, embodiments of the present disclosure provide a cap assembly structure. The cap assembly 100 includes a top cover 10 and a sealing sleeve 20, the sealing sleeve 20 having first and second ends that are oppositely disposed, where the first end of the sealing sleeve 20 is openly disposed, an outer side wall of the sealing sleeve 20 is sealingly connected to an inner side wall of the housing 110, the top cover 10 is mounted proximate to an open top end of the sealing sleeve 20, and a portion of the top cover 10 is exposed through the open top end of the sealing sleeve 20.

The cap assembly 10 further includes an explosion-proof sheet 30, an orifice plate 40, and an insulating gasket 50, where the top cover 10, the explosion-proof sheet 30, the insulating gasket 50, and the orifice plate 40 are disposed inside the sealing sleeve 20 from top to bottom.

Further, the cap assembly 100 is provided with an explosion-proof structure including a plurality of first holes 11 provided on the top cover 10, the top cover 10 including a base portion 12 and an extension portion 13 provided to protrude relative to the base portion 12, the base portion 12 being provided around the extension portion 13, the extension portion 13 including a side face 131 and a top end face 132 that are connected, where the base portion 12 and the top end face 132 of the top cover 10 are both configured to be planar, the top end face 132 is provided in parallel with the base portion 12, the first holes 11 are provided on the side face 131, and further, the first holes 11 extend from an edge of the base portion 12 to an edge of the top end face 132.

The top cover 10 is provided with a plurality of first holes 11, the plurality of first holes 11 are maintained evenly spaced. The number of the plurality of first holes 11 may be two or three or four, etc., and the first holes 11 are generally configured as waist-shaped holes.

The explosion-proof structure also includes an explosion-proof sheet 30 and one or more first score lines 31 disposed on the explosion-proof sheet 30. The explosion-proof sheet 30 includes first and second surfaces 301 and 302 that are oppositely disposed, where a portion of the first surface 301 is welded to the orifice plate 40 and a portion of the second surface 302 is welded to the top cover 10.

The explosion-proof sheet 30 further includes a main body 32 and a protrusion 33 protruding upward with respect to the first surface 301 of the main body 32. The protrusion 33 is located in a central area of the explosion-proof sheet 30. The main body 32 further includes a first platform 321 and a second platform 322, where the first platform 321 is recessed downward with respect to the second platform 322, and the protrusion 33 continues to be recessed downward with respect to the first platform 321, and the second surface 302 of the second platform 322 is welded to the top cover 10.

The explosion-proof sheet 30 further includes a first side wall 34 vertically connected to the second platform 322, the first side wall 34 being configured to be arranged around at least a portion of an outer side wall of the top cover 10, an inner wall surface of the first side wall 34 abutting an outer side face of the top cover 10, and an outer wall surface of the first side wall 34 abutting an inner wall surface of the sealing sleeve 20.

The first platform 321 is provided thereon one or more first score lines 31, which is formed by recessing inwardly from the first surface 301 to the second surface 302. In one example thereof, the first score lines 31 are configured as an annular groove structure, which is configured as a non-closed curve, in which an angle of circumference of the annular groove around the explosion-proof sheet 30 is greater than 180 degrees. In a further preferred implementation, the angle of circumference of the annular groove around the explosion-proof sheet 30 is 338°~342°, so that the circumference in which the first score lines 31 are located is configured to be easily ruptured, thereby forming an outlet for a high-pressure air flow.

In a preferred embodiment, the first score lines 31 are configured as an annular groove structure, and the first score lines 31 are provided so that a thickness of a residual wall where the first score lines 31 of the explosion-proof sheet 30 are located is relatively thin, and the residual wall is preferentially ruptured by an action of the high-pressure air flow so that cracks are easily formed, thereby forming the outlet for the high-pressure air flow.

The explosion-proof structure further includes at least one first pressure relief hole 41 provided in the orifice plate 40, one end of the first pressure relief hole 41 being in communication with an inner cavity of the battery 1000, and another end of the first pressure relief hole 41 directly facing the first score lines 31 of the explosion-proof sheet 30.

A plurality of first pressure relief holes 41 may be provided in the orifice plate 40. The number of the plurality of first pressure relief holes 41 may be three, four, five, or six, and the plurality of first pressure relief holes 41 may be maintained evenly spaced with respect to a central area of the orifice plate 40.

The orifice plate 40 includes a third surface 401 and a fourth surface 402 that are oppositely disposed, where a portion of the third surface 401 is laser welded to the protrusion 33 of the explosion-proof sheet 30.

At least a portion of a projection plane of the first score lines 31 described above on the third surface 401 is located inside the first pressure relief hole(s) 41.

A blind hole 44 is further provided on the fourth surface 402 and is formed by recessing inwardly from the fourth surface 402.

The orifice plate 40 includes a first portion 42 and a second portion 43 that are connected, where the first pressure relief hole(s) 41 is/are disposed between the first portion 42 and the second portion 43, and the first portion 42 is disposed closer to the central area of the orifice plate 40 relative to the second portion 43.

Under a condition that a pressure inside the battery 1000 reaches a certain threshold, the high-pressure air flow enters through the first pressure relief hole(s) 41 and impinges on the first platform 321 of the explosion-proof sheet 30. The first platform 321 of the explosion-proof sheet 30 is configured to be reversible. The first platform 321 of the explosion-proof sheet 30 is turned upwards. The first platform 321 further causes a welding between a bottom end face of the protrusion 33 and the orifice plate 40 to be ruptured, so that an electrical connection inside the battery 1000 is interrupted, thereby protecting the battery 1000. Under a condition that the pressure inside the battery 1000 continues to increase, cracks are generated on the residual wall where the first score lines 31 on the explosion-proof sheet 30 are located, and the high-pressure air flow is decompressed through the outlet formed at the cracks of the first score lines 31.

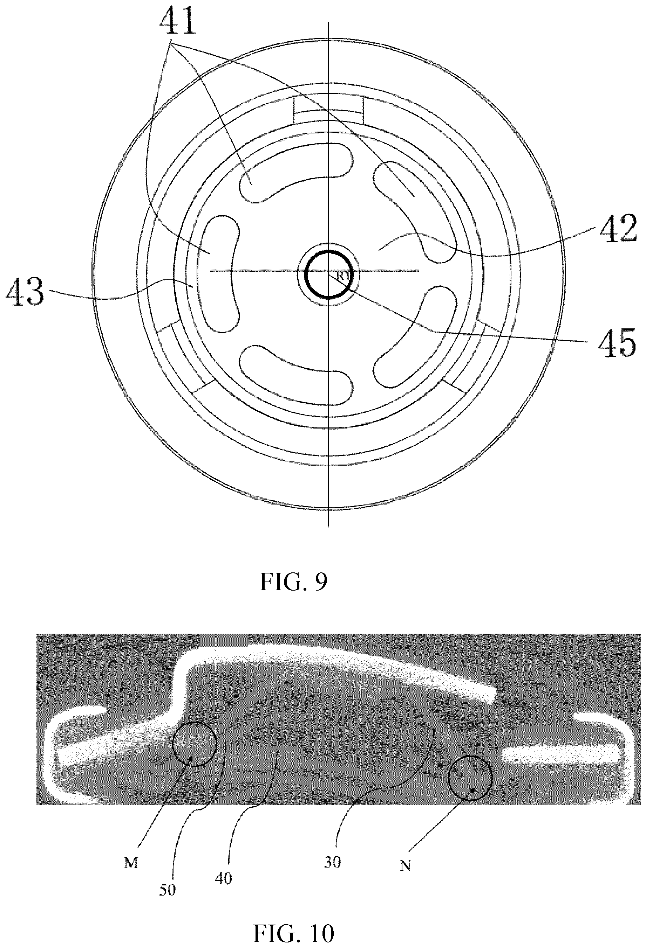

The central area of the explosion-proof sheet 30 is bonded to the central area of the orifice plate 40 by laser welding. A portion of the third surface 401 is welded to a portion of the first surface 301 to form a welding area as shown in FIG. 9. The welding area is a substantially annular welding line 45, and a projection of the welding area on the fourth surface 402 is located within the blind hole 44.

Further, the welding area between the explosion-proof sheet 30 and the orifice plate 40 is configured to be within a central radius R1 from a center of the explosion-proof sheet 30, and the welding area is located within an area in which the protrusion 33 of the explosion-proof sheet 30 is located. In one example thereof, the radius R1 of the welding area of the explosion-proof sheet 30 is not greater than 0.75mm, and the area in which the protrusion 33 of the explosion-proof sheet 30 is located is configured to be in a range of a circle having a radius 1/2R2 with the center of the explosion-proof sheet 30 as center of the circle.

In a specific embodiment, an outer radius R1 of the welding area of the explosion-proof sheet 30 may be any value in a range of 0.3mm∼0.75mm or may be of an arbitrary range, for example, the radius R1 of the welding area of the explosion-proof sheet 30 may be 0.4 mm, 0.5 mm, 0.6 mm or 0.7mm. The larger the radius R1 of the welding area of the explosion-proof sheet 30, the greater the welding tension between the explosion-proof sheet 30 and the orifice plate 40, and the higher the pressure threshold inside the battery 1000 corresponding to the electrical disconnection between the orifice plate 40 and the explosion-proof sheet 30. The smaller the radius R1 of the welding area of the explosion-proof sheet 30, the lower the welding tension between the explosion-proof sheet 30 and the orifice plate 40, and the lower the pressure threshold inside the battery 1000 corresponding to the electrical disconnection between the orifice plate 40 and the explosion-proof sheet 30. It should be noted that considering that a line width of a welding wire is generally 0.15mm~0.2mm, the outer radius R1 of the welding area of the explosion-proof sheet 30 is not less than 0.3 mm.

The explosion-proof sheet 30 described above is electrically connected to the orifice plate 40 only by the welding area describe above, and the other area between the explosion-proof sheet 30 and the orifice plate 40 is insulated by the provision of the insulating gasket 50. The insulating gasket 50 substantially covers an upper surface of the second portion 43 of the orifice plate described above and an outer side wall of the orifice plate 43.

Under a condition that a contact connection other than the welding area exists between the explosion-proof sheet 30 and the orifice plate 40, a short circuit is formed inside the battery 1000, thereby causing the battery 1000 to fail the short circuit and crush tests.

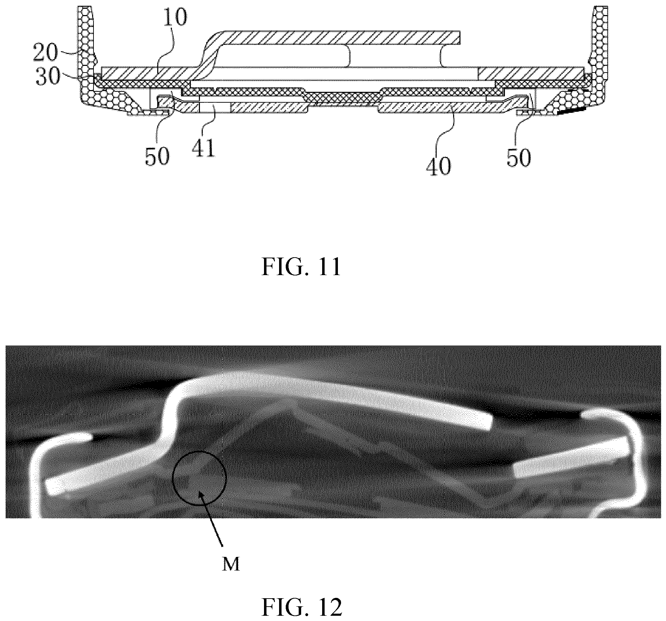

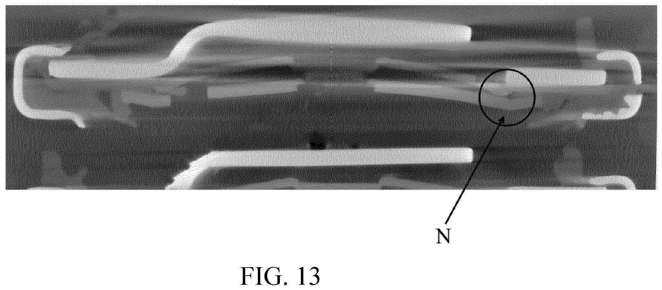

Using the cap assembly 100 shown in FIG. 11 for testing, it was found that, when the battery 1000 and its module were subjected to a crush test, after the explosion-proof sheet 30 and the welding area of the orifice plate 40 was disconnected, an electrical connection was still formed between the explosion-proof sheet 30 and the orifice plate 40. Referring to FIGS. 12 and 13, the electrical connection may be at site M as indicated in FIG. 12. Further, the electrical connection may be at site N as indicated in FIG. 13. Because the explosion-proof sheet 30 and the orifice plate 40 are short circuited at site M or N, the battery 1000 and its module fail the crush test.

When the battery 1000 and its module are subjected to a short circuit test, it is found that after the explosion-proof sheet 30 and the welding area of the orifice plate 40 was disconnected, an electrical connection was still formed between the explosion-proof sheet 30 and the orifice plate 40. Referring to FIGS. 12 and 13, the electrical connection may be at site N as indicated in FIG. 13. Further, the electrical connection may be at site M as indicated in FIG. 12. Because the explosion-proof sheet 30 and the orifice plate 40 are short circuited at site M or N, the battery 1000 and its module fail the short circuit test.

Referring further to the cap assembly structure shown in FIGS. 12 and 13, when the battery 1000 and its module are subjected to the crush and short circuit tests, it is found that the site M of the short circuit connection between the explosion-proof sheet 30 and the orifice plate 40 and the site N of the short circuit connection are disposed adjacent to the first pressure relief hole(s) 41.

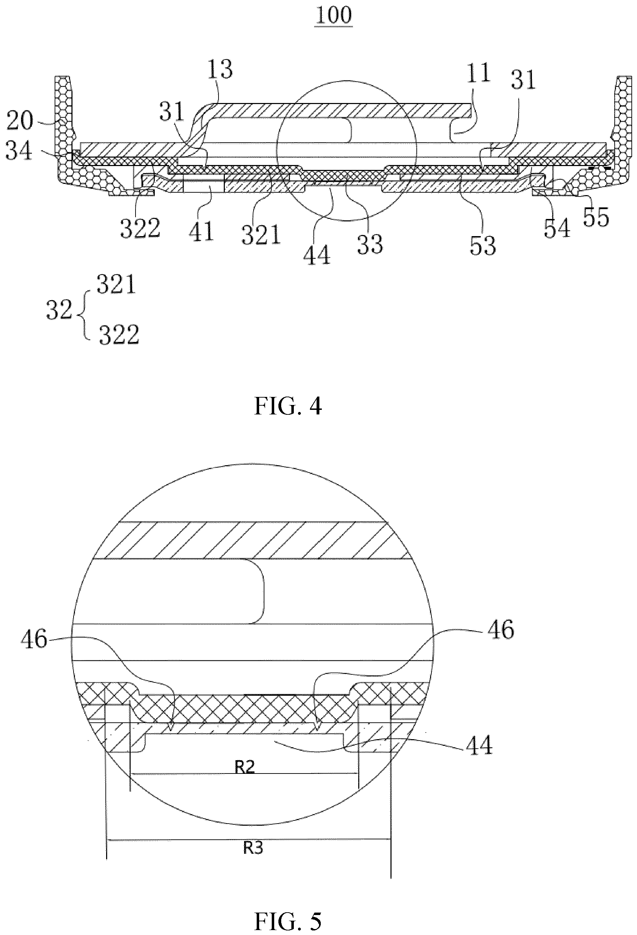

In view of the above problems, the structure of the insulating gasket 50 is improved in the embodiments of the present disclosure so that the insulating gasket 50 may provide a more comprehensive insulating function to the explosion-proof sheet 30 and the orifice plate 40. Specifically, as shown in FIGS. 4 to 5, the orthographic projection surface of the insulating gasket 50 on the orifice plate 40 extends to the first portion 42 covering the orifice plate. Because the first portion 42 is closer to the central area of the orifice plate 40 relative to the second portion 43 and the first pressure relief hole(s) 41, by increasing a coverage area of the insulating gasket 50 on the orifice plate 40, it is possible to effectively prevent contact between the explosion-proof sheet 30 and the orifice plate 40 during a process of deformation, thereby affecting the short circuit and crush tests of the battery 1000.

Further referring to the battery 1000 configured with the insulating gasket structure shown in FIG. 10, after performing the short circuit and crush tests, no contact is formed between the orifice plate 40 and the explosion-proof sheet 30.

Further, by increasing the coverage area of the insulating gasket 50 on the orifice plate 40, the insulating gasket 50 may effectively prevent a short circuit between the orifice plate 40 and the explosion-proof sheet 30 from occurring during a process of pressure relief of the battery 1000, thereby effectively improving a service life of the battery 1000 and a safety performance of the battery 1000.

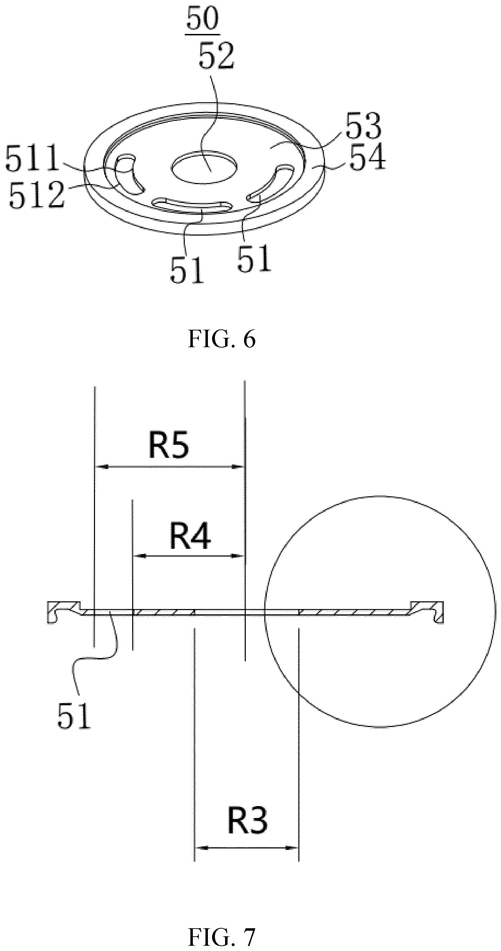

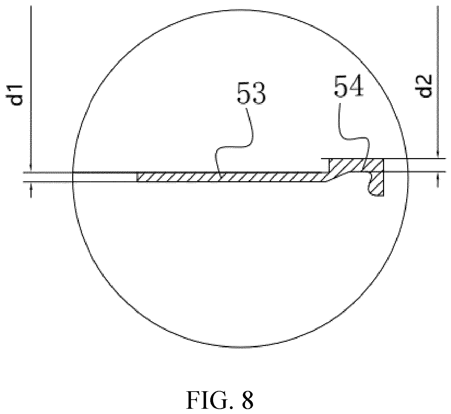

Further referring to FIGS. 4 to 9, the insulating gasket 50 includes at least one second pressure relief hole 51 that is disposed to directly face the first pressure relief hole 41. Specifically, the second pressure relief hole 51 is disposed coaxially with the first pressure relief hole 41, and an inner diameter of the second pressure relief hole 51 is not smaller than an inner diameter of the first pressure relief hole 41. By provision of the second pressure relief hole 51 substantially coinciding with the first pressure relief hole 41, the insulating gasket 50 is prevented from affecting a pressure relief effect of the first pressure relief hole 41 on the orifice plate 40.

One end of the second pressure relief hole 51 is disposed opposite to the first pressure relief hole 41, and another end of the second pressure relief hole 51 is disposed to directly face the first score line 31. A projection of the second pressure relief hole 51 on the first surface 301 may cover a portion of a projection of the first score lines 31 on the first surface 301, thereby facilitating a high-pressure impact of a high-pressure air flow on the first score lines 31 after passing through the first pressure relief hole 41 and the second pressure relief hole 51, thereby breaking the first score lines 31, facilitating a rapid release of the high-pressure air flow.

In a preferred embodiment, the second pressure relief hole 51 and the first pressure relief hole 41 are each configured as a waist-shaped hole, so that the pressure relief capability of the second pressure relief hole 51 is increased while the strength of the insulating gasket 50 is maintained.

Further, the second pressure relief hole 51 has a suitable size, and in one example thereof, the second pressure relief hole 51 is configured to be disposed in an annular area having a radius ranging from 4mm~6mm from a center of the insulating gasket 50. Specifically, the second pressure relief hole 51 includes a first side edge 511 and a second side edge 512, where the first side edge 511 is disposed closer to the center of the insulating gasket 50 relative to the second side edge 512. The first side edge 511 is disposed on a circumference with a radius R4 of 4mm from the center of the insulating gasket 50, and the second side edge 512 is disposed on a circumference with a radius R5 of 6mm from the center of the insulating gasket 50. Alternatively, the first side edge 511 is disposed on a circumference with a radius R4 of 4mm from the center of the insulating gasket 50, and the second side edge 512 is disposed on a circumference with a radius R5 of 5.8mm from the center of the insulating gasket 50.

A plurality of second pressure relief holes 51 may be provided in the insulating gasket 50. The plurality of second pressure relief holes 51 may be maintained evenly spaced with respect to the center of the insulating gasket 50, and the number of the plurality of second pressure relief holes 51 may be two, three, four, five, or six. The number of the second pressure relief holes 51 may be set to be the same as the number of the first pressure relief holes 41.

Further, a through-hole 52 is provided in the insulating gasket 50. The through-hole 52 is located in a central area of the insulating gasket 50, and an inner diameter R3 of the through-hole 52 is larger than an outer diameter R2 of the protrusion 33 of the explosion-proof sheet, so that the through-hole 52 is configured for passage of the protrusion 33 of the explosion-proof sheet 30.

In one example thereof, the battery 1000 includes a cylindrical battery of model 18650 in which the outer diameter of the protrusion 33 of the explosion-proof sheet is in a range of 1.9mm∼2.5mm and the inner diameter of the through-hole 52 of the insulating gasket is in a range of 2.6mm∼3.3mm. Further, the outer diameter of the protrusion 33 may be 2.0mm, 2.1mm, 2.2mm, 2.3mm, or 2.4mm, and the inner diameter of the through-hole 52 of the insulating gasket may be 2.7mm, 2.8mm, 2.9mm, 3.0 mm, 3.1mm, or 3.2mm.

In another example, the battery 1000 includes a cylindrical battery of model 21700 in which the outer diameter of the protrusion 33 of the explosion-proof sheet is in a range of 2.9mm∼3.4mm and the inner diameter of the through-hole 52 of the insulating gasket is in a range of 3.5mm~4.0mm. Further, the outer diameter of the protrusion 33 may be 3.0mm, 3.1mm, 3.2mm, or 3.3mm, and the inner diameter of the through-hole 52 may be 3.6mm, 3.7mm, 3.8mm, or 3.9mm.

Under a condition that a size of the through-hole 52 of the insulating gasket and a size of the protrusion 33 of the explosion-proof sheet are provided within the aforementioned ranges of size, on one hand, it facilitates the protrusion 33 to pass through the through-hole 52, and on the other hand, it facilitates the formation of a suitable welding area between the explosion-proof sheet 30 and the orifice plate 40. Further, the suitable welding area is provided in a central area with a radius of no more than 0.75mm from the center of the explosion-proof sheet 30 or the orifice plate 40, thereby facilitating the formation of a suitable welding tension between the explosion-proof sheet 30 and the orifice plate 40.

The insulating gasket 50 includes a third portion 53 and a fourth portion 54 protruding with respect to the third portion 53, the second pressure relief hole(s) 51 being disposed on the third portion 53, an upper surface of the third portion 53 being in contact with a portion of the first surface 301 of the first platform 321 of the explosion-proof sheet, a lower surface of the third portion 53 being in contact with a main body of the orifice plate 40, an upper surface of the fourth portion 54 being in contact with a portion of the first surface 301 of the second platform 322 of the explosion-proof sheet, and a lower surface of the fourth portion 54 being in contact with a convex edge of the orifice plate 40.

A thickness d1 of the third portion 53 described above is smaller than a thickness d2 of the fourth portion 54. In one example thereof, the thickness d1 of the third portion 53 is greater than 0.2 mm and the thickness d2 of the fourth portion 54 is greater than 0.25 mm. Because the fourth portion 54 is closer to an edge of the orifice plate 40 relative to the third portion 53, the thickness d1 of the third portion 53 is properly reduced. Under a condition that the orifice plate 40 and the explosion-proof sheet 30 are in a process of deformation, the third portion 53 is prone to deform with the orifice plate 40, such that reducing the thickness d1 of the third portion 53 facilitates reducing an influence of the insulating gasket 50 on the deformation process of the orifice plate 40 and the explosion-proof sheet 30.

Further, the insulating gasket 50 further includes a fifth portion 55 bent and attached to the fourth portion 54, where the fifth portion 55 is wrapped an outer side wall of the orifice plate 40.

By performing the short circuit and crush tests on the battery 1000 configured with the cap assembly 100 described above, it is found that the battery 1000 may pass the short circuit and crush tests. By analyzing the tested battery 1000, it is found that, as shown in FIG. 10, increasing the coverage area of the insulating gasket 50 on the orifice plate 40 may effectively prevent the orifice plate 40 and the explosion-proof sheet 30 from coming into contact during a process of deformation, and in turn preventing from causing short circuiting inside the battery 1000.

In a further preferred embodiment, the insulating gasket 50 described above is made of a PFA (polyfluoroalkoxy, a.k.a., soluble polytetrafluoroethylene) material, or the insulating gasket 50 described above is made of a PPS (polyphenylenesulphide, a.k.a., polyphenylene sulfide) material, where a melting point of the PFA material may reach 304°C and a melting point of the PPS material is 285°C~300°C. In the related art, the insulating gasket 50 is made of a PBT (polybutylene terephthalate) material, where a melting point of the PBT material is 233°C. Thus, the insulating gasket 50 made of the PFA material or the PPS material has better heat resistance performance than the insulating gasket 50 made of the PBT material, thereby facilitating the battery 1000 to pass the high-current discharge test, improving the safety performance of the battery 1000.

In order to further enhance the explosion-proof performance of the battery 1000, in an embodiment of the present disclosure, one or more second score lines 46 are further provided on the orifice plate 40, the second score lines 46 being provided on the third surface 401 of the orifice plate 40. In one example thereof, the one or more second score lines 46 are configured as an annular groove structure, a projection of the second score lines 46 on the fourth surface 402 being located inside the blind hole 44, thereby facilitating rupturing of the residual wall on which the second score lines 46 are located.

In a further preferred embodiment, a projection of the second score lines 46 on the third surface 401 is located outside the welding area. On one hand, it facilitates the formation of a stable bond between the explosion-proof sheet 30 and the orifice plate 40 by laser welding; on the other hand, the second score line 46 is arranged at a periphery of the welding area, thereby facilitating the rupturing of the residual wall on which the second score lines 46 are located prior to that of the welding area, thereby facilitating the cracking of the welding area when a suitable pressure threshold is reached, without causing a situation in which it is difficult to break between the orifice plate 40 and the explosion-proof sheet 30 due to the excessive welding tension between the orifice plate 40 and the orifice plate 30.

## Claims

1. A cap assembly (100) for a battery, the cap assembly (100) comprising:
an explosion-proof sheet (30) including a main body (32) and a protrusion (33) provided on a first surface (301) of the main body (32);
an orifice plate (40) including a first portion (42) and a second portion (43) that are connected, at least one first pressure relief hole (41) being disposed between the first portion (42) and the second portion (43), the first portion (42) being disposed closer to a center of the orifice plate (40) relative to the second portion (43);
an insulating gasket (50) disposed between the explosion-proof sheet (30) and the orifice plate (40), wherein the insulating gasket (50) being configured to cover at least a portion of the first portion (42).

2. The cap assembly (100) of claim 1, wherein the insulating gasket (50) includes at least one second pressure relief hole (51) disposed coaxially with the first pressure relief hole (41), the second pressure relief hole (51) having an inner diameter greater than or equal to an inner diameter of the first pressure relief hole (41).

3. The cap assembly (100) of claim 2, wherein the second pressure relief hole (51) includes a waist-shaped hole.

4. The cap assembly (100) of claim 3, wherein the second pressure relief hole (51) is disposed in an annular area with a radius of 4mm~6mm from a center of the insulating gasket (50).

5. The cap assembly (100) of claim 1, wherein the insulating gasket (50) further includes a through-hole (52) in a central area of the insulating gasket (50) for passage of the protrusion (33).

6. The cap assembly (100) of claim 3, wherein an inner diameter of the through-hole (52) is 2.6mm∼3.3mm, or an outer diameter of the protrusion (33) is 1.9mm∼2.5mm, and/or wherein an inner diameter of the through-hole (52) is 3.5mm~4.0mm, or an outer diameter of the protrusion (33) is 2.9mm~3.4mm.

7. The cap assembly (100) of any one of claims 2 to 6, wherein the insulating gasket (50) includes a third portion (53) on which the second pressure relief hole (51) is provided, and a fourth portion (54) provided to protrude with respect to the third portion (53).

8. The cap assembly (100) of claim 7, wherein a portion of the main body (32) of the explosion-proof sheet (30) is received inside the third portion (53).

9. The cap assembly (100) of claim 7, wherein a thickness of the third portion (53) is greater than 0.2mm, or a thickness of the fourth portion (54) is greater than 0.25mm.

10. The cap assembly (100) of claim 7, wherein the insulating gasket (50) further includes a fifth portion (55) bent and attached to the fourth portion (54), the fifth portion (55) being wrapped around an outer side wall of a portion of the orifice plate (40).

11. The cap assembly (100) of any one of claims 2 to 6, wherein the main body (32) is further provided with one or more first score lines (31), the explosion-proof sheet (30) further including a second surface (302) disposed opposite the first surface (301), the first score lines (31) being recessed inwardly from the first surface (301) to the second surface (302), a projection of the second pressure relief hole (51) on the first surface (301) being configured to cover a portion of a projection of the first score lines (31) on the first surface (301).

12. The cap assembly (100) of claim 11, wherein the orifice plate (40) further includes a third surface (401) and a fourth surface (402) that are oppositely disposed, the orifice plate (40) further including a blind hole (44) being formed by recessing inwardly from the fourth surface (402), the first surface (301) and the third surface (401) being welded to form a welding area on the third surface (401), a projection of the welding area on the fourth surface (402) being located within the blind hole (44).

13. The cap assembly (100) of claim 12, wherein the orifice plate (40) further includes one or more second score lines (46) disposed on the third surface (401), the second score lines (46) being configured as an annular groove, an orthographic projection of the annular groove on the fourth surface (402) being located within the blind hole (44).

14. A battery (1000) comprising the cap assembly (100) of any one of claims 1-13, the battery comprising a cylindrical lithium ion battery.

15. A battery pack comprising a plurality of batteries (1000), each of the batteries (1000) comprising the cap assembly (100) of any one of claims 1-13.
